# EUROPEAN PATENT SPECIFICATION

(11) **EP 3 875 799 B1**
(45) Date of publication and mention of the grant of the patent: **06.09.2023**
(21) Application number: 20213380.7
(22) Date of filing: 11.12.2020
(51) Int. Cl.: F16F 1/38

(54) **SILENT BLOCK BUSHING**
GERÄUSCHARME BLOCKBUCHSE
BAGUE DE SILENT BLOC

(30) Priority: 11.12.2019 IN 201921051330
(43) Date of publication of application: 08.09.2021
(73) Proprietor: Sujan Contitech AVS Pvt. Ltd., Pune, Maharashtra 410 501 (IN)
(72) Inventor: Bakiyaraj, Gundumalai, 410 501 MIDC Chakan, Taluka Khed, Pune, Maharashtra (IN); Vishwas, More, 410 501 MIDC Chakan, Taluka Khed, Pune Maharashtra (IN); Hemant, Kamble, 410 501 MIDC Chakan, Taluka Khed, Pune Maharashtra (IN); Kazutoshi, Satori, 410 501 MIDC Chakan, Taluka Khed, Pune Maharashtra (IN)
(74) Representative: Studio Torta S.p.A.

(56) References cited:
- CN-A- 110 360 255
- CN-U- 208 686 861
- DE-A1-102010 018 536
- US-A1- 2019 128 320

## Description

### FIELD OF THE INVENTION

The present invention relates generally to bushings in automobile manufacturing, and more particularly to silent block bushing that has a void in its geometry.

### BACKGROUND OF THE INVENTION

In the current art, the automotive industry face problems regarding emission control and fuel efficiency, especially due to the design and weight of components involved in the manufacturing of the same. In order to reduce the weight of the designs, to induce low emissions, and to increase fuel efficiency in the automotive manufacturing, aluminum and plastic are used as an alternative for steel. However, the usage of plastic involves multiple process related problems in manufacturing and assembly.

In conventional method of automotive manufacturing that is associated with the method, design, and type of material as mentioned before, we face a problem of non-cylindricity or ovality when the design is formed with a constant wall thickness. This is prevalent in the design of silent block bushing, where the assembly of the same involves issues related to alignment limitation in the axial direction when the assembly is integrated within the outer tube.

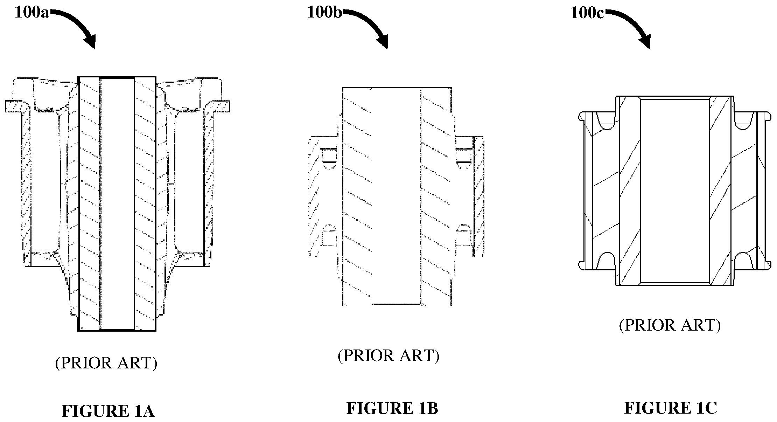

Referring now to prior Figures 1A-1C, which shows sectional view of types of silent block bushings, which have an outer sleeve that is made of plastic material. In an anti-vibration system, we need to use multiple silent block bushes to isolate the vibration from the road and the powertrain. These prior art designs face the problem of non-cylindricity or ovality, which makes it difficult during assembly. Bushings as known in the art that suffers of the above problems are disclosed in documents CN208686861 A1, DE102010018536 A1, US2019128320 A1 or CN110360255 A1.

Therefore, there is a need for a block bushing design that overcomes the problem of non-cylindricity.

### SUMMARY OF THE INVENTION

The present subject matter relates to cradle bushings that are used in automotive industry to fix the cradle with body, more specifically, to a silent block bushing.

The main function of cradle bushing is to link the cradle with body and to attenuate vibration to the body.

A cradle bushing or the 'silent block bushing' disclosed here addresses the above mentioned need to overcome the problem of non-cylindricity. The silent block bushing comprises at least two flanges and a set of ribs. The flanges comprise a top flange and a bottom flange that are positioned at opposing ends of an outer tube, wherein the flanges limit axial displacement of the silent block bushing. The ribs that are positioned on the bottom flange to avoid deformation of the silent block bushing during assembly, and provide a control over cylindricity for consistency during pushing in and pushing out of a load. In an embodiment, diameter of the bottom flange is less than diameter of the top flange. In an embodiment, the cylindricity is further controlled based on number of the ribs that are positioned on the bottom flange, wherein the ribs further provide similar stiffness on the top flange and the bottom flange.

In an embodiment, thickness of the outer tube which is made of plastic, is varied to reduce cylindricity and provide consistency in the pushing in and pushing out of the load. In an embodiment, the top flange, the bottom flange, and the ribs provide equal stiffness in both the top and the bottom flanges, which reduces cylindricity, and wherein the bottom flange recompenses for axial directional limitation. In an embodiment, the silent block bushing further comprise a set of ribs that are positioned in middle of the plastic outer tube to provide an increased control over the cylindricity and consistency during the pushing in and the pushing out of the load.

Other aspects, advantages, and salient features of the present invention will become apparent to those skilled in the art from the following detailed description, which, taken in conjunction with the annexed drawings, discloses exemplary embodiments of the invention. Reference will now be made to the accompanying diagrams which illustrate, by way of an example, and not by way of limitation, of one possible embodiment of the invention.

### BRIEF DESCRIPTION OF THE ACCOMPANYING DRAWINGS

The following drawings are illustrative of particular examples for enabling systems and methods of the present invention, are descriptive of some of the methods and mechanism, and are not intended to limit the scope of the invention. The drawings are not to scale (unless so stated) and are intended for use in conjunction with the explanations in the following detailed description.
- Figures 1A-1C shows sectional views of types of silent block bushings, as known in the prior art.
- Figure 2A is front perspective view of the silent block bushing, as an embodiment of the present disclosure.
- Figure 2B is partial cutaway view of the silent block bushing, as the embodiment shown in Figure 2A of the present disclosure.
- Figure 3 is a front perspective view of another embodiment of the silent block bushing, as the embodiment of the present disclosure.

Persons skilled in the art will appreciate that elements in the figures are illustrated for simplicity and clarity and may represent both hardware components of the system. Further, the dimensions of some of the elements in the figure may be exaggerated relative to other elements to help to improve understanding of various exemplary embodiments of the present disclosure.

Throughout the drawings, it should be noted that like reference numbers are used to depict the same or similar elements, features, and structures.

### DETAILED DESCRIPTION OF THE INVENTION

The following description with reference to the accompanying drawings is provided to assist in a comprehensive understanding of exemplary embodiments of the invention. It includes various specific details to assist in that understanding but these are to be regarded as merely exemplary. Accordingly, persons skilled in the art will recognize that various changes and modifications to the embodiments described herein can be made without departing from the scope and spirit of the invention. In addition, descriptions of well-known functions and constructions are omitted for clarity and conciseness.

The terms and words used in the following description are not limited to the bibliographical meanings, but, are merely used by the inventor to enable a clear and consistent understanding of the invention. Accordingly, it should be apparent to the person skilled in the art that the following description of exemplary embodiments of the present invention are provided for illustration purpose only.

It is to be understood that the singular forms "a," "an," and "the" include plural referents unless the context clearly dictates otherwise.

Figures 1A-1C shows sectional views of types of silent block bushings 100a, 100b, and 100c, as known in the prior art. These silent block bushings 100a, 100b, and 100c have an outer sleeve that is made of plastic material. In an anti-vibration system, such multiple silent block bushes 100a, 100b, and 100c need to be utilized to isolate the vibration from the road and powertrain. However, these prior arts face the problem of non-cylindricity or ovality, which makes it difficult during assembly.

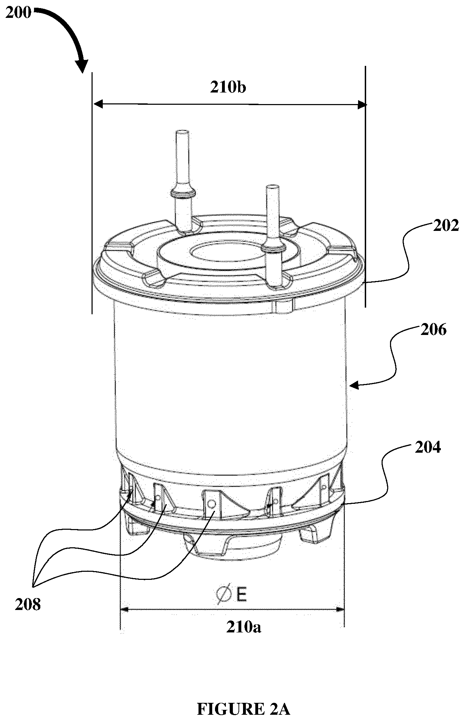

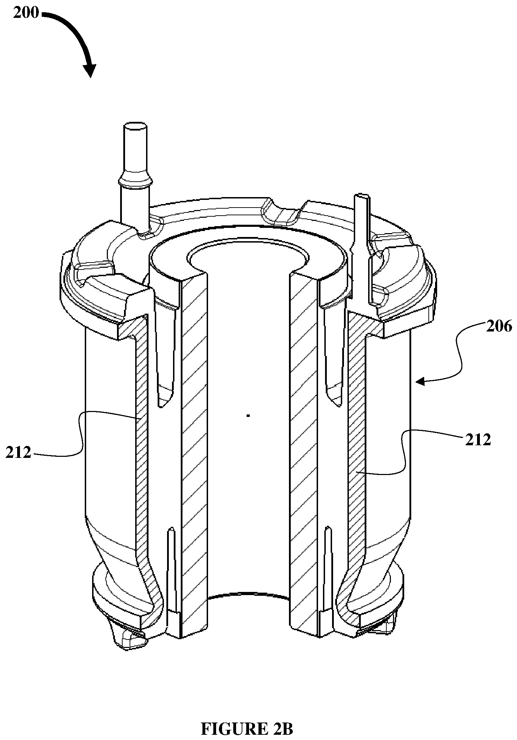

Figure 2A is front perspective view of the silent block bushing 200, and Figure 2B is partial cutaway view of the silent block bushing 200, as the embodiment shown in Figure 2A of the present disclosure. As known in the art, the main function of cradle bushing or the 'silent block bushing' is to link the cradle with body and to attenuate vibration to the body. The silent block bushing 200 comprises two flanges 202 and 204 positioned at opposing ends of a plastic outer tube 206, where the diameter 210a of the bottom flange 204 is less than the diameter 210b of the top flange 202. The flanges 202 and 204 are used for limiting axial displacement of the silent block bushing 200. A set of ribs 208 are positioned on the bottom flange 204, which are configured to avoid deformation of the silent block bushing 200 during assembly, and provide a control over cylindricity for consistency during pushing in/pushing out load. In an embodiment, the cylindricity is further controlled based on the number of ribs 208 that are positioned on the flange 204, which also provides same stiffness on the top flange 202 and the bottom flange 204.

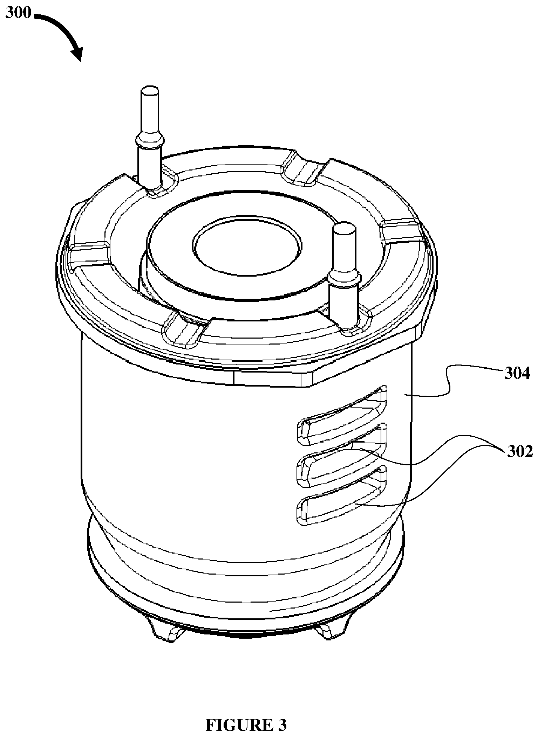

As shown in Figure 2B, the thickness 212 of the plastic outer tube 206 is varied to provide control over cylindricity and consistency in pushing in/pushing out a load. This variable thickness 212 of the plastic outer tube 206 also contributes to reduce cylindricity. In other words, the silent block bushing 200 is designed to overcome non cylindricity issue. As shown in Figure 2A, the top flange 202, the bottom flange 204, and the ribs 208 provide equal stiffness in both flanges 202 and 204, which contributes to reduce cylindricity. The design of the bottom flange 204 also recompenses for any axial directional limitation as well as good for assembly. Figure 3 is a front perspective view of another embodiment of the silent block bushing 300, as the embodiment of the present disclosure. As shown in figure 3, a set of ribs 302 are also positioned in the middle of the plastic outer tube 304 to provide an increased control over cylindricity and consistency in pushing in/pushing out load.

The foregoing description of several methods and an embodiment of the present disclosure have been presented for purposes of illustration. It is not intended to be exhaustive or to limit the present disclosure to the precise steps and/or forms disclosed, and obviously many modifications and variations are possible within the scope of the appended set of claims.

## Claims

1. A silent block bushing (200) comprising:
at least two flanges comprising a top flange (202) and a bottom flange (204) that are positioned at opposing ends of an outer tube (206), wherein the flanges (202, 204) limit axial displacement of the silent block bushing (200);
**characterised in that**
a set of ribs (208) that are positioned on the bottom flange (204) to avoid deformation of the silent block bushing (200) during assembly, and to provide a control over cylindricity for consistency during pushing in and pushing out of a load.

2. The silent block bushing as claimed in claim 1, wherein diameter of the bottom flange (204) is less than diameter of the top flange (202).

3. The silent block bushing as claimed in claim 1, wherein the cylindricity is further controlled based on number of the ribs (208) that are positioned on the bottom flange (204), and wherein the ribs (208) further provide similar stiffness on the top flange (202) and the bottom flange (204).

4. The silent block bushing as claimed in claim 1, wherein the outer tube (206) is made of plastic and its thickness is varied to reduce cylindricity and provide consistency in the pushing in and pushing out of the load.

5. The silent block bushing as claimed in claim 1, wherein the top flange (202), the bottom flange (204), and the ribs (208) provide equal stiffness in both the top and the bottom flanges (202, 204), which reduces cylindricity, and wherein the bottom flange (204) recompenses for axial directional limitation.

6. The silent block bushing as claimed in claim 1, further comprising a set of ribs (302) that are positioned in middle of the plastic outer tube (206) to provide ar increased control over the cylindricity and consistency during the pushing in and the pushing out of the load.

## Patentansprüche

1. Geräuscharme Blockbuchse (200), umfassend:
wenigstens zwei Flansche, umfassend einen Oberflansch (202) und einen Unterflansch (204) welche an zwei gegenüberliegenden Enden eines Außenrohrs (206) positioniert sind, wobei die Flansche (202, 204) eine axiale Beweglichkeit der geräuscharmen Blockbuchse (200) begrenzen,
**gekennzeichnet durch**
einen Satz Rippen (208) welche auf dem Unterflansch (204) positioniert sind, um eine Deformation der geräuscharmen Blockbuchse (200) während der Montage zu verhindern, und, um eine Kontrolle der Zylindrizität für die Konsistenz beim Einschieben und Ausschieben einer Last zu ermöglichen.

2. Geräuscharme Blockbuchse nach Anspruch 1,
wobei der Durchmesser des Unterflansches (204) geringer ist, als der Durchmesser des Oberflansches (202).

3. Geräuscharme Blockbuchse nach Anspruch 1,
wobei die Zylindrizität ferner basierend auf einer Anzahl der Rippen (208), welche auf dem Unterflansch (204) positioniert sind, kontrolliert wird, und wobei die Rippen (208) dem Oberflansch (202) und dem Unterflansch (204) die gleiche Steifigkeit aufprägen.

4. Geräuscharme Blockbuchse nach Anspruch 1,
wobei das Außenrohr (206) aus Kunststoff gefertigt ist und seine Dicke variiert wird, um die Zylindrizität zu reduzieren und Konsistenz beim Einschieben und Ausschieben der Last bereitzustellen.

5. Geräuscharme Blockbuchse nach Anspruch 1,
wobei der Oberflansch (202), der Unterflansch (204) und die Rippen (208) sowohl im oberen als auch im unteren Flansch (202, 204) für die gleiche Steifigkeit sorgen, was die Zylindrizität verringert, und wobei der untere Flansch (204) die axiale Richtungsbegrenzung ausgleicht.

6. Geräuscharme Blockbuchse nach Anspruch 1, ferner umfassend einen Satz Rippen (302), welche in der Mitte des Kunststoffaußenrohrs (206) positioniert sind, um eine erhöhte Kontrolle der Zylindrizität und Konsistenz beim Einschieben und Ausschieben der Last bereitzustellen.

## Revendications

1. Bague (200) de silentbloc comprenant :
au moins deux brides comprenant une bride supérieure (202) et une bride inférieure (204) qui sont positionnées aux extrémités opposées d'un tube extérieur (206), dans laquelle les brides (202, 204) limitent le déplacement axial de la bague (200) de bloc silencieux ; **caractérisée en ce que**
un ensemble de nervures (208) qui sont positionnées sur la bride inférieure (204) pour éviter la déformation de la bague (200) de silentbloc lors de l'assemblage, et pour fournir une commande sur la cylindricité pour régularité lors de la poussée entrante et de la poussée sortante d'une charge.

2. Bague de silentbloc selon la revendication 1, dans laquelle le diamètre de la bride inférieure (204) est inférieur au diamètre de la bride supérieure (202).

3. Bague de silentbloc selon la revendication 1, dans laquelle la cylindricité est en outre commandée sur la base du nombre des nervures (208) qui sont positionnées sur la bride inférieure (204), et dans laquelle les nervures (208) offrent en outre une rigidité similaire sur la bride supérieure (202) et la bride inférieure (204).

4. Bague de silentbloc selon la revendication 1, dans laquelle le tube extérieur (206) est composé de plastique et son épaisseur varie pour réduire la cylindricité et fournir une régularité lors de la poussée entrante et de la poussée sortante de la charge.

5. Bague de silentbloc selon la revendication 1, dans laquelle la bride supérieure (202), la bride inférieure (204) et les nervures (208) offrent une rigidité égale à la fois dans les brides supérieure et inférieure (202, 204), ce qui réduit la cylindricité, et dans laquelle la bride inférieure (204) favorise la limitation directionnelle axiale.

6. Bague de silentbloc selon la revendication 1, comprenant en outre un ensemble de nervures (302) qui sont positionnées au milieu du tube extérieur
en plastique (206) pour fournir une
une meilleure commande de la cylindricité et de la régularité lors de la poussée entrante et de la poussée sortante de la charge.
